# EUROPEAN PATENT APPLICATION

(11) **EP 2 371 771 A1**
(43) Date of publication of application: **05.10.2011**
(21) Application number: 11154234.6
(22) Date of filing: 11.02.2011
(51) Int. Cl.: C02F 3/32, C02F 3/04, C02F 1/28, C02F 1/66, C02F 101/10, C02F 101/16, C02F 3/34

(54) **Modular filtration reed bed**

(30) Priority: 12.02.2010 GB 1002371
(71) Applicant: Greener Waste Limited, Wakefield Leeds WF1 2QP (GB)
(72) Inventor: Christian, Stuart, Leeds, WF1 2QP (GB)
(74) Representative: Neilson, Martin Mark

(57) **Abstract**

A filtration reed bed for treating waste water having water impermeable sidewalls and a base to define a freestanding trough. A plurality of baskets are arranged over the base and between the side walls to provide a grid arrangement of baskets. A primary filtration medium is accommodated within the baskets into which are planted reed plants. Due to the modular construction, the individual baskets may be removed, recharged and reinstalled at the bed without disrupting non-exhausted media and plants within neighbouring baskets.

## Description

The present invention relates to a modular filtration bed and in particular, although not exclusively to a filtration bed constructed from a plurality of individual baskets that may be selectively removed and reinstalled at the bed without disturbing filtration medium at other parts of the bed.

Sewage or waste water treatment is typically a multistep process and includes physical, chemical and biological treatment to remove contaminants such that the runoff water is suitable for reintroduction to a watercourse.

Conventional sewage treatment involves three fundamental stages. A primary treatment involves storage of sewage in a container to allow heavy solids to settle at the bottom whilst oils and fats float to the surface. The settled and floating materials may then be removed and discharged for subsequent treatment. Secondary treatment involves removal of suspended biological matter within the already treated effluent. Secondary treatment processes include trickling filters, rotating biological contactors, suspended growth systems and constructed reed beds to degrade the biological content of the sewage and to further separate suspended particulate matter within the effluent prior to further processing. Tertiary treatment is typically regarded as the final stage of effluent processing prior to reintroduction to the watercourse. Conventional tertiary treatments specifically include removal of high levels of nutrients such as nitrogen and phosphorous components. Phosphorous can be a particular environmental problem as high levels lead to eutrophication of the water system resulting in growth and decomposition of oxygen-depleting plants and is hazardous to aquatic life that inhabits the water system into which treated water is discharged.

Reed beds are an accepted tertiary treatment stage to apply a final polish to waste water that has intensive primary and secondary treatments. A number of conventional large reed beds have been installed on sites where solids and residual Biochemical Oxygen Demand (BOD) have been an issue and although the bed size is calculated on a recognised formula for a life expectancy of around 25 years, the beds suffer from excess solids build up and blocking within only 5 to 6 years of use.

The process of unblocking, cleaning and recharging a conventional reed bed is inefficient, dirty and often a difficult process involving the use of large digging equipment, considerable disruption to the site and the significant risk of a discharge breach.

There is therefore a need for an improved reed bed system that addresses the above problems.

Accordingly, the inventors provide a modular reed bed system in which the filtration medium is partitioned within the reed bed into sections that allow maintenance at any point within the bed without affecting the integrity of the overall bed structure and in particular regions of the filtration media that are still performing efficiently and do not require replacement. The construction of the present invention therefore allows sections of the bed (including reeds and the reed growing media) to be selectively replaced so as to maintain optimum performance and ensure the appropriate level of waste water treatment with minimal disruption to in-line processing and the overall waste water treatment process.

Additionally, the present modular reed bed comprises solid entrapment zones or alternatively termed sediment collection gullies, channels or rows that extend perpendicular to the flow of effluent across the bed from an input end to an output end. Unlike conventional reed beds, the present filtration bed is configured to allow flushing of the media and generally the entire bed so as to dislodge built-up solid matter and allow it separate and then collect within the entrapment gullies where it may be extracted from the bed once the bed has been drained. This is not possible with conventional reed beds that are submerged below ground level having media that is not partitioned and separated to form solid collection zones.

According to a first aspect of the present invention there is provided a filtration bed for treating waste water comprising: water impermeable sidewalls and a base that define a trough; a plurality of baskets arranged over the base between the sidewalls to provide a grid arrangement of baskets, the baskets having sidewalls that allow the through flow of water so that water to be treated can flow through the baskets from an input end of the bed to an output end of the bed; a primary medium within the baskets to assist filtration of the waste water; reed plants planted in the primary medium; wherein individual baskets may be removed and reinstalled at the bed without disrupting the medium within neighbouring baskets.

Preferably, the filtration bed comprises at least one or a plurality of rows of baskets extending between the impermeable sidewalls, perpendicular to the flow of waste water through the bed that are devoid of the primary medium. Alternatively, these rows may comprise a different filtration medium to the majority of the baskets. At least some of these empty basket zones, arranged in rows, provide the solid entrapment regions. A port, suitable for connection to a suction tanker hose or other suction pump device, can be provided at each end region of the entrapment zone or gully to enable the suction device to extract the collected solid matter.

The present 'freestanding' filtration bed, mounted above ground level, provides a filtration system that may be conveniently and repeatedly flushed or cleaned of the deposited solid matter. This is possible as the filtration bed comprises an inlet, an outlet and importantly the entrapment zones into which solid matter may flow, become entrapped and then may be either scooped of sucked from the gullies conveniently.

Preferably, the bed comprises an aerated bio-media zone provided at one of the rows of baskets devoid of the primary medium. Preferably, the aerated media zone is positioned towards or at the input end of the bed in close proximity to the waste water supply. Preferably, the bed further comprises a phosphate removal zone positioned at one of the rows of baskets that does not comprise the primary medium that supports growth of the reeds. The phosphate removal zone comprises a medium within the baskets configured to effectively and efficiently remove phosphate and is therefore. Preferably, the phosphate removal zone is positioned towards or at the outlet end of the filtration bed. Optionally, the reed bed further comprises a row or portion of baskets comprising activated carbon, these being configured to remove hormones and other biological species from the water. Preferably the activated carbon or activated charcoal is positioned at regions towards or at the output end of the bed. Alternatively or in addition, the activated carbon may be positioned remote and downstream of the bed but coupled to the bed outlet in fluid communication so as to treat the liquor output from the bed.

Preferably, the aeration zone positioned towards the input end of the filtration bed comprises an oxygen supply conduit or mat configured to release oxygen (from a suitable oxygen source) into the waste water within the aeration zone.

Preferably, the filtration bed comprises a bacteria pre-assimilation unit configured for accelerated nitrification (ammonia removal) of the waste water, coupled to the reed bed in fluid communication at the input end of the bed. The bacteria pre-assimilation unit is configured to incubate pre-assimilated bacteria and allow propagation/proliferation of the bacteria that may be preselected for optimum biological activity with the waste water to maximize purification.

Preferably, the filtration bed system further comprises a flow regulation chamber positioned at the input end of the bed and configured to control the flow rate of waste water onto the reed bed.

Preferably, the filtration bed further comprises at least one sensor submerged within the bed and configured to monitor a variety of different parameters of the bed including for example temperature, flow rate, biochemical properties, oxygen, nitrogen content, pH and other chemical/physical properties of the waste water and filtration media. The filtration bed system may further comprise wireless communication means and suitable electronic hardware to output a signal received from the sensors to a remote device such as a mobile phone or computer to enable remote monitoring of the bed performance and condition.

Preferably, the filtration bed comprises a pre-filtration stack positioned at the input end of the bed, the stack extending vertically above the plurality of baskets arranged over the base, the stack comprising a structure to support a pre-filtration medium or media within the stack; wherein waste water may be introduced onto an upper region of the stack to allow the water to flow under gravity down through the stack and into the trough of bed. Preferably, the pre-filtration media comprises limestone. Alternatively, the pre-filtration media may comprise any one or a combination of limestone; blast furnace slag; a plastic mesh; activated charcoal; volcanic pumice; a medium to remove heavy metals from the waste water. Preferably, the support structure comprises a stack of the individual baskets positioned in the trough region of the filtration bed. Preferably, the baskets are stacked on top of one another to form a column of baskets, with each basket comprising a specific filtration medium. According to specific embodiments, different filtration media may be included within baskets at different levels of the column stack so as to provide substantially horizontal zones configured to provide a different filtration function to the waste water as it flows vertically down the column from an upper input end to a lower output end in fluid communication with the input end of the main filtration trough.

Preferably, the filter bed is housed within a greenhouse or greenhouse structure such as a 'polytunnel' configured to isolate or at least partially isolate the reed bed from external weather conditions. When positioned within a greenhouse or polytunnel, the filtration bed performance may be optimised by controlling the climate within the greenhouse/polytunnel structure to optimise bio-media activity within the filtration bed and accelerated organic removal.

According to a further aspect of the present invention there is provided a plurality of individual filtration beds as described herein arranged in parallel/or in series, with each bed positioned in fluid communication with one another so as to provide a series of interconnected modular filtration beds or a grid network of interconnected modular filtration beds, each bed comprising the plurality of individual baskets as described herein.

According to a further aspect of the present invention there is provided a waste water filtration assembly comprising: a plurality of filtration beds described herein connected in-series such that an output end of a first bed of the series is coupled in fluid communication to the input end of a second bed arranged immediately downstream of the first bed. Preferably the first bed is positioned at a height vertically above the second bed such that the waste water is capable of flowing under gravity from the output end of the first bed to the input end of the second bed.

According to a further aspect of the present invention there is provided a method of treating waste water using at least one filtration bed, the method comprising: providing a filter bed frame having water impermeable sidewalls and a base to form a trough; containing a primary medium within a plurality of baskets arranged over the water impermeable base and between the water impermeable sidewalls to provide a grid arrangement; allowing water to flow from an input end to an output end of the filtration bed via the plurality of baskets such that the waste water flows through the medium within the baskets and in contact with reed plants, planted within the medium; wherein the individual baskets may be removed and reinstalled at the filter bed without disrupting the medium within neighbouring baskets.

The method further comprises flushing or cleaning the filtration bed. The method of cleaning comprises closing the outlet(s) so as to prevent waste water exiting the filtration bed. Water (and optionally the effluent to be treated) is then introduced onto the filtration bed so as to flood the bed such that the water level extends above the level of the baskets. The media within the baskets is then agitated mechanically (for example using a pole or rod) or even sonically (using suitable means) via a manual or automated process, so as to dislodge solid matter from the medium (gravel). The floating solid, having being dislodged, then flows into the collection gullies where it settles. The water within the bed is then drained leaving the solid collected in the gullies from where it may be removed by suction or by manual digging or scooping. Preferably, the bed is flushed using a hosepipe. Optionally, a non-effluent source of water may be connected to the input end of the bed and via suitable valves the effluent flow may be stopped whilst the non-effluent water is introduced onto the bed to provide flushing.

A specific implementation of the present invention will now be described, by way of example only and with reference to the accompanying drawings in which:
figure 1 is a perspective view of the filter bed comprising a plurality of individual baskets arranged side-by-side within a framework having sidewalls and a base according to a specific implementation of the present invention;
figure 2 is a perspective view of an individual basket partially filled with the primary medium;
figure 3 is a side elevation view of the bed of figure 1 including a pre-filtration stack positioned at the input end of the bed;
figure 4 is a plan view of the bed of figure 13;
figure 5 is a cross sectional end elevation view of the bed of figure 4 through A-A;
figure 6 is a perspective view of a plurality of beds of figure 1 connected in series and a different heights according to a specific implementation of the present invention.

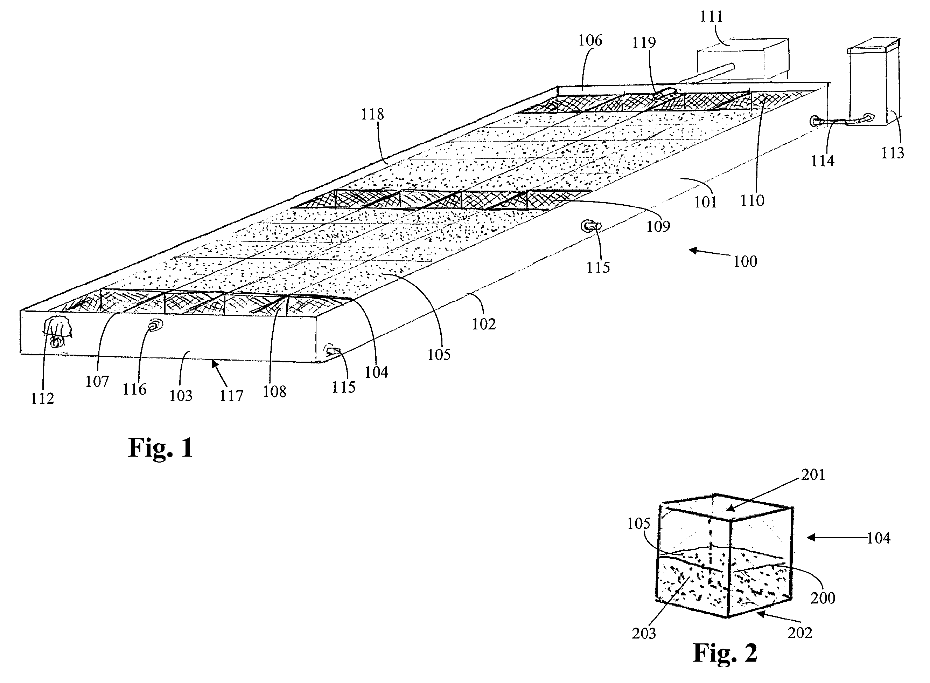

Referring to figures 1 and 2, the filter bed 100 comprises an external frame having two water impermeable elongate sidewalls 101 extending the length of bed 100 and two impermeable elongate end walls 103 extending between each end of the sidewalls 101. A water impermeable base 117 extends between the walls 101 and 103 so as to create an elongate trough 118 approximately 0.5 m deep.

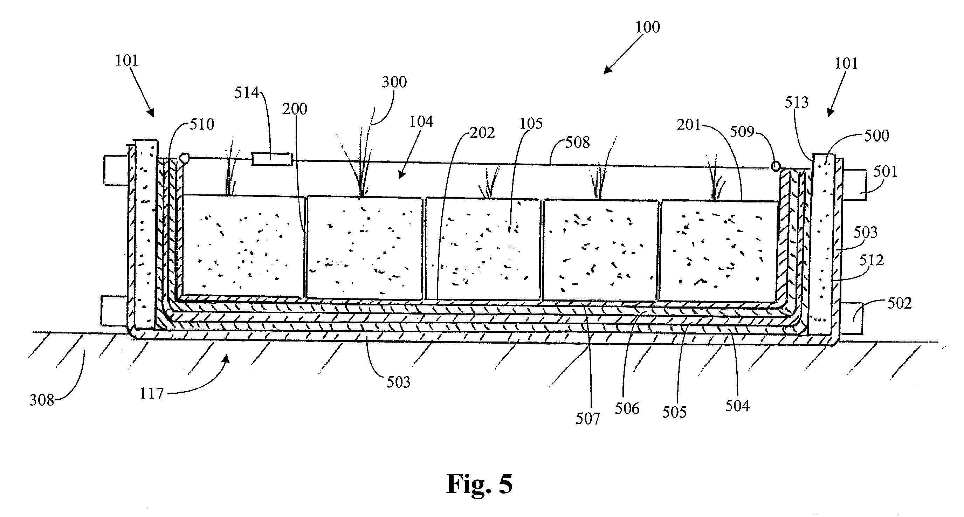

A plurality of individual baskets 104 are arranged side-by-side within the trough 118 positioned on top of base 117 and between sidewalls 101 and 103 so as to form a grid network of baskets having rows extending across the width of trough 118 and columns extending along the length of trough 118 thereby completely filling trough 118. Each basket 104 comprises sidewalls 200 and a base 202. Sidewalls and base 200, 202 are formed by a mesh, cage or lattice work structure 203 so as to allow the through flow of fluid through the baskets whilst being sufficiently dense to contain a filtration medium 105, loaded into basket 104 via the upper open end 201. Each filtration basket is made from a reasonably rigid polymer. Alternatively, baskets 104 may be formed from a metal optionally being coated so that contaminant material does not leach into the waste water within bed 100. Each individual basket 104 may comprise means (not shown) so as to interconnect with neighbouring baskets. Alternatively each basket 104 is simply held in place within the filter bed by the weight of the filtration medium 105 and a support frame detailed with reference to figure 5.

According to the main embodiment, the primary medium 105 of the bed used to support growth of the reeds comprises gravel. According to an alternative embodiment the filtration medium 105 is volcanic pumice or a volcanic pumice based material. This lightweight material makes the present filtration bed particularly suitable for placement on roof tops and the like where weight reduction of the assembly is important. The primary medium may comprise any material suitable to support the growth of reeds such as phragmites australis.

The filter bed comprises an input end 106 at which waste water is introduced to the bed via a flow regulation chamber 111. The bed further comprises an outlet end 107 comprising one or a plurality of outlets 112, 116, 115. A suitable delivery conduit 119 extends to the input end of bed 106 from the flow regulation chamber 111.

The filter bed 100 further comprises a bacteria pre-assimilation unit 113 coupled in fluid communication with the bed 100 via suitable pipe work 114. The bacteria pre-assimilation unit is configured to proliferate and incubate bacteria for introduction into the bed 100 at the input end 106.

The filtration bed 100 further comprises *'quiet zones'* extending across the rows of baskets perpendicular to the direction of waste water flow through the bed from the input end 106 to the output end 107. These quiet zones are provided by individual baskets 104 being devoid of filtration medium 105. In particular, and according to a specific implementation, the bed 100 comprises a first quiet zone 110 positioned towards the input end of the bed 106, an intermediate quiet zone 109 positioned approximately mid-way between the input end 106 and the output end 107 and a third quiet zone 108 positioned towards the output end 107. Each quiet zone may be completely devoid of the primary medium 105 or may comprise a different quantity of medium 105 and/or a different filtration medium to that of the majority of the baskets. In particular, quiet zone 108 may comprise a specific natural or synthetic filtration medium configured to remove phosphate. Alternatively or in addition quiet zone 108 may comprise a filtration medium configured to remove hormones or other human biological species from the water, such as an activated carbon based material.

The first quiet zone 110 may be configured to remove ammonia and to provide a zone for augmentation of the filtration bacteria prior to introduction of the bacteria into the filtration medium 105. In particular, the quiet zone 110 comprises an aeration means such as a mat (not shown) or conduit (not shown) configured to introduce gaseous oxygen into the waste water at zone 110.

The intermediate quiet zone 109 is configured to collect solids separated from the waste water as it flows from the input end 106 to the output end 107. These sludge entrapment zones 109 may then be conveniently emptied by simply removing the baskets at zone 109, depositing the sludge elsewhere and reintroducing the baskets into the filter bed 100.

Reed plants, in particular phragmites australis are planted in the filtration media 105 across the network of baskets 104. According to the modular construction, when required the filtration medium, including the reed plants may be replenished or changed at specific locations within the filter bed 100 by simply removing and reintroducing the basket having replaced or/and treated the filtration medium and/or reed plant. Accordingly, the filtration medium may comprise individual baskets having the same or different filtration medium across the grid network.

Specific outlets 115 may be provided at the quiet zone 109 and optionally at other locations over the reed bed 100 so as to allow selected drainage of the liquid within the bed.

The bacteria assimilation unit 113 introduces bacteria onto the reed bed 100 so as to provide biological cleaning and to accelerate degradation of solids in the bed by altering their physical state and enabling them to pass easily through the filtration medium to be entrapped at the entrapment zones 109. The present filtration bed therefore does not become saturated with solid as with conventional filter beds and may be easily cleaned to remove deposited solids at specific regions of the bed 109. Accordingly, the interval required for cleaning or replacement of the filtration medium 105 is increased.

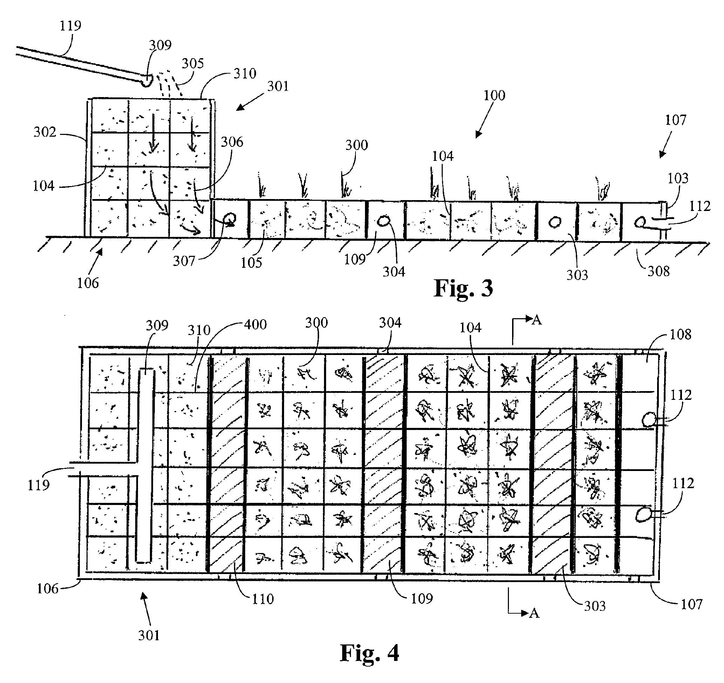

Referring to figures 3 and 4 a further embodiment of the filtration bed 100 comprises an initial pre-filtration stack 301 formed at the input end 106 of bed 100. The pre-filtration stack 301 comprises a vertical column of baskets 104 optionally supported within a suitable support structure 302. The column comprises three rows of baskets extending along the length of bed 100 and four filtration baskets stacked on top of one another such that an upper input end 310 of stack 301 is at a vertical height above the baskets 104 positioned within trough 118. According to the specific embodiment, each basket 104 of stack 310 contains a limestone based material and is configured to neutralise the waste water prior to introduction to the primary region of the bed 100 containing the primary medium 105 and reed plants 300. A pre-filtration stage using limestone is particularly effective to reduce the acidity of waste water from certain sources that contain high levels of sulphur dioxide. As will be appreciated, sulphur dioxide-rich water encourages anaerobic bacterial activity and would decrease the effectiveness of the reed plants 300 to break-down the solid matter as the root growth of plants 300 would be inhibited.

The delivery conduit 119 terminates at a boom 309 configured to dispense waste water 305 across the full width of stack 302 at input end 310. The waste water then flows vertically downward 306 through the filtration medium and onto the reed bed as the output end of the stack 301 is positioned in fluid communication with the main length of the bed at region 307.

According to the embodiment of figures 3 and 4, a further quiet zone 303 is positioned within the bed 100 so as to collect any residual solid matter not captured by zones 110, 109. Zone 110 may alternatively be configured to remove ammonia and be connected to a supply of oxygen as described previously. Alternatively or in addition the bacteria assimilation unit 113 may be connected to quiet zone 110.

Each quiet zone 110, 109, 108, 303 comprises a connection port 304 to enable connection of a suction hose connected at its other end to a suitable pump to allow collected solid matter to be pumped from each entrapment gully 110, 109, 108, 303. According to further embodiments, each of the gullies may comprise different and specific baskets or spaces that do not comprise sidewalls 400 aligned longitudinally along the length of bed 100 (and widthways across each gully). Such a configuration would provide an 'open gully' structure in which the solid matter can be readily removed by suction through ports 304 without being hindered by the lattice structure 203 of sidewalls 400.

Stack 301 may alternatively be formed as a roughing filter for high BODs and contain blast furnace slag or a plastic mesh to remove biomass prior to introduction to the reeds 300.

In particular, the effectiveness of the pre-filtration stack 300 may be selectively adjusted by changing the rate of flow of waste water 305 onto the stack 310 and also the surface area of the stack 301 that affects the oxygen levels within the filtration media within stack 301. Accordingly, when stack 301 is filled with blast furnace slag or plastic meshing, the stack 301 provides a biological pre-filtration function. When baskets 104 contain limestone, stack 301 provides a pH adjustment function. Such functions maybe combined using a combination of media at different levels within stack 310.

Figure 5 illustrates a preferred construction of the bed 100 at a cross section through A-A of figure 4. The elongate 'length' walls 101 comprise wooden, in particular hardwood, boards 500.

Boards 500 may also comprise an additional water impermeable coating (not shown) extending entirely around its surface 512, 513. The boards 500 are held in place by elongate upper frame sections 501 and corresponding lower frame sections 502 formed from wood or metal bracing bars. Cross bars (not shown) may also extend between upper and lower frames 501, 502. Boards 500 and frames 501, 502 extend around the perimeter of trough 118 such that the boards 500 and frames 501, 502 also extend along end 'width' walls 103 of bed 100.

Additional structural support for the assembled bed 100 is provided by bracing straps 503 that extend over the external facing surface 512 of boards 500 and under the base 117 of bed 100. Straps 503 are pulled taught and are secured to outer surface 512 by staples, bolts, rivets, nails or other mechanical anchorage (not shown). A plurality of straps 503 extend widthways across bed 100 at a plurality of regions along its length. Additionally, tensioning cables 508 also extend between boards 500 at a plurality of regions along the length of bed 100. Each cable 508 is secured to each board 500 via a screw hook 510 extending from the internal facing surface 513 of each board 500. Each hook comprises an eyelet 509 through which each cable 508 is threaded and connected. Such that each cable 502 extends laterally across the width of the bed 100 between boards 500. Tension in each cable 508 may be adjusted via a conventional cable shortening device 514 positioned at a region along the length of cable 508 between screw hooks 510.

A plurality of membranes are positioned at the inner region of bed 100 around and under each of the baskets 104 containing the gravel/filtration medium 105 into which is planted the reeds 300. A first cushioning membrane 507 that is preferably a thick fibrous or more preferably Gortex™ membrane is positioned in contact with the sidewalls 200 and base 202 of each basket so as to provide a blanket liner on the interior of trough 118. A second cushioning membrane (Gortex™) 506 is positioned under first membrane 507 so as to encapsulate it and provide a second sheet-like blanket for baskets 104. A water impermeable (rubber) membrane 505 surrounds the second cushioning membrane 506 that provides a water impermeable sheet-like layer extending internally within the trough cavity 118 so as to entirely contain the waste water. A third cushioning membrane (Gortex™) 504 is then layered around the rubber membrane 505 so as to entirely encapsulate it to form a final encapsulating layer and to provide protection from sharp objects such as stones within the ground 308 puncturing the membrane 505. All layers 507, 506, 505 and 504 are entrapped by the braced sidewalls 500. In particular each of these membranes extends to a height above the open upper end 201 of each basket 104 that may be secured to boards 500 with suitable mechanical anchorage such as screws, staples, nails or rivets (not shown).

By tensioning cables 508 and straps 503, the sidewalls 200 of baskets 104 aligned longitudinally with bed 100 are forced into contact with the neighbouring baskets 104 of the row. This prevents waste water tracking between the basket walls 200, along the length of the bed 100 which would otherwise allow untreated water to flow out and around the baskets and avoid biological treatment via contact with the roots of reeds 300.

According to the specific embodiment, cables 502 are formed from stainless steel wire and boards 500 are modular along the length and width of bed 100 and formed from 3 m by 0.6 m planks.

Accordingly, the present filtration bed 100 is entirely modular and freestanding above the ground 508 and is therefore conveniently transportable between treatment sites. In particular, the bed 100 may be placed upon a platform (not shown) where the platform can be loaded onto a low-loader transport vehicle for example.

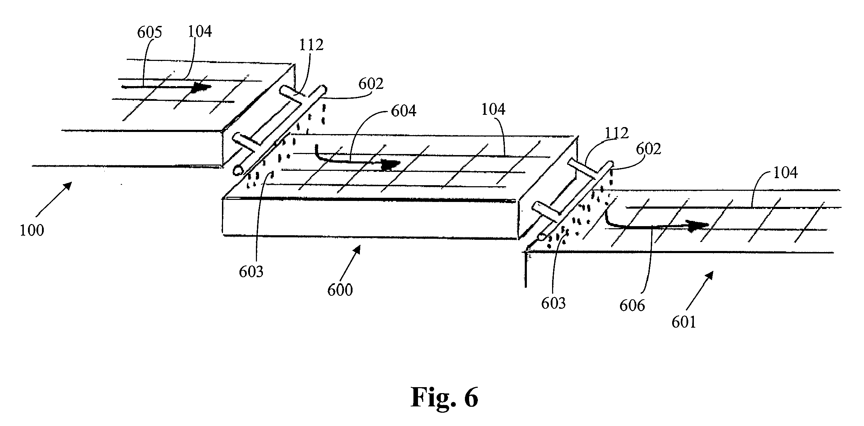

The present invention also comprises a network or series or interconnected beds 100 as illustrated in figure 6. A first bed 100 is coupled in fluid communication with second bed 600 which in turn is coupled to a third bed 601. According to the specific embodiment, bed 100 is positioned at a height vertically above the height of bed 600 which in turn is positioned at a height vertically above third bed 601. However, each bed 100, 600, 601 is not positioned vertically above one another to form a stack but rather forms a stepped arrangement. The outlet 112 of each bed 100, 600, 601 comprises a boom 602 from which waste water is output at each respective bed. In particular, waste water flows 605 through first bed 100 and then falls vertically 603 from boom 602 onto bed 600. This waterfall arrangement serves to aerate the water 603 via a natural (energy neutral) oxygenation process to improve nitrification of the waste water. The waste water then flows 604 through bed 600 to be oxygenated again by falling 603 onto bed 601 via boom 602 for continued biological processing 606. According to the specific implementation, the vertical height distance between beds 100, 600, 601 is approximately 1 m.

The network of interconnected beds 100 comprises a plurality of beds 100, 600, 601 connected in series to form a parallel array of in-series connected beds. This way, one bed or all beds in a series, 100, 600, 601 may be cleaned whilst an alternate parallel series remains operational.

According to further specific implementations, the medium 105 towards the input end 106 comprises 25 to 45 mm diameter gravel. The gravel size is graduated along the length of the bed to reduce to a diameter to approximately 15 to 35 mm towards the outlet end 107.

## Claims

1. A filtration bed for treating waste water comprising:
water impermeable sidewalls and a base that define a trough;
a plurality of baskets arranged over the base between the sidewalls to provide a grid arrangement of baskets, the baskets having sidewalls that allow the through flow of water so that water to be treated can flow through the baskets from an input end of the bed to an output end of the bed;
a primary medium within the baskets to assist filtration of the waste water;
reed plants planted in the primary medium;
wherein individual baskets may be removed and reinstalled at the bed without disrupting the medium within neighbouring baskets.

2. The bed as claimed in claim 1 wherein at least one row of baskets extending between the sidewalls, perpendicular to the flow of waste water through the trough between the input end and the output end of the bed is devoid of the primary medium to create at least one solid entrapment zone.

3. The bed as claimed in a claim 1 wherein at least one row of baskets extending between the sidewalls, perpendicular to the flow of waste water through the trough between the input end and the output end of the bed comprises a different medium to the primary medium into which is planted the reed plants.

4. The bed as claimed in any preceding claim wherein at least one row of baskets extending between the sidewalls, perpendicular to the flow of waste water through the bed from the input end to the output end of the bed comprises an aerated bio-media zone having an oxygen supply conduit or mat configured to release oxygen into the waste water within the aeration zone.

5. The bed as claimed in any preceding claim wherein at least one row of baskets extending between the sidewalls, perpendicular to the flow of waste water through the trough between the input end and the output end of the bed comprises a phosphate removal medium to provide a phosphate removal zone positioned towards the output end of the bed.

6. The bed as claimed in any preceding claim wherein at least one row of baskets extending between the sidewalls, perpendicular to the flow of waste water through the trough between the input end and the output end of the bed comprises an activated carbon medium.

7. The bed as claimed in any preceding claim further comprising a bacteria pre-assimilation unit configured for accelerated nitrification of the waste water, the pre-assimilation unit coupled in fluid communication at the input end of the bed, the pre-assimilation unit configured to incubate pre-assimilated bacteria and encourage proliferation of the bacteria prior to transfer to the input end of the bed.

8. The bed as claimed in any preceding claim further comprising at least one or a plurality of sensors positioned at the region of the bed configured to monitor a variety of different parameters at the bed, the sensor selected from any one or a combination of the following set of:
• temperature sensor;
• a water flow rate sensor;
• a biochemical sensor;
• an oxygen content sensor;
• a nitrogen content sensor;
• a pH sensor.

9. The bed as claimed in claim 8 further comprising a communication means and suitable electronic hardware to output a signal received from the at least one sensor to a remote device to enable remote monitoring of the different parameters at the bed.

10. The bed as claimed in any preceding claim further comprising a pre-filtration stack positioned at the input end of the bed, the stack extending above the plurality of baskets arranged over the base, the stack comprising a structure to support a pre-filtration medium or media within the stack;
wherein waste water may be introduced onto an upper region of the stack to allow the water to flow under gravity down through the stack and into the trough.

11. The bed as claimed in claim 10 wherein the structure comprises a plurality of the baskets that are arranged over the base.

12. The bed as claimed in claim 10 wherein the pre-filtration medium or media comprises any one or a combination of the following set of:
• limestone;
• blast furnace slag;
• a plastic mesh;
• activated charcoal;
• volcanic pumice;
• a medium to remove heavy metals from the waste water.

13. A waste water filtration assembly comprising:
a plurality of filtration beds as claimed in any preceding claim connected in-series such that an output end of a first bed of the series is coupled in fluid communication to the input end of a second bed arranged immediately downstream of the first bed.

14. The assembly as claimed in claim 13 wherein the first bed is positioned at a height above the second bed such that the waste water is capable of flowing under gravity from the output end of the first bed to the input end of the second bed.

15. A method of treating waste water using at least one filtration bed, the method comprising:
providing a filter bed frame having water impermeable sidewalls and a base to form a trough;
containing a primary medium within a plurality of baskets arranged over the water impermeable base and between the water impermeable sidewalls to provide a grid arrangement;
allowing water to flow from an input end to an output end of the filtration bed via the plurality of baskets such that the waste water flows through the medium within the baskets and in contact with reed plants, planted within the medium;
wherein the individual baskets may be removed and reinstalled at the filter bed without disrupting the medium within neighbouring baskets.
